# EUROPÄISCHE PATENTSCHRIFT

(11) **EP 2 183 548 B1**
(45) Veröffentlichungstag und Bekanntmachung des Hinweises auf die Patenterteilung: **29.06.2011**
(21) Anmeldenummer: 08786708.1
(22) Anmeldetag: 31.07.2008
(51) Int. Cl.: G01C 19/56

(54) **MIKROMECHANISCHER DREHRATENSENSOR**
MICROMECHANICAL RATE-OF-ROTATION SENSOR
CAPTEUR MICROMÉCANIQUE DE VITESSE DE ROTATION

(30) Priorität: 31.07.2007 DE 102007035806
(43) Veröffentlichungstag der Anmeldung: 12.05.2010
(73) Patentinhaber: Sensordynamics AG, 8403 Graz-Lebring (AT)
(72) Erfinder: HAMMER, Hanno, A-8403 Graz/Lebring (AT)
(74) Vertreter: Leonhard, Frank Reimund
(86) Internationale Anmeldenummer: PCT/EP2008/060086
(87) Internationale Veröffentlichungsnummer: WO 2009/016240

(56) Entgegenhaltungen:
- WO-A-2008/122502
- DE-A1- 19 523 895
- DE-A1- 19 844 686
- DE-A1- 19 928 307
- DE-C1- 19 641 284
- US-A- 5 869 760

## Beschreibung

Die vorliegende Erfindung betrifft einen mikromechanischen Coriolis-Drehratensensor zur Erfassung einer Drehrate um eine im Folgenden als X-Achse bezeichnete Messachse. Er weist ein Substrat, eine Schwingstruktur und Mittel zum Erzeugen einer Drehschwingung um eine zur Messachse orthogonale Anregungsachse (Z-Achse) auf. Die Schwingstruktur ist mittels erster, innerer Aufhängungen oder mittels einer zentralen Aufhängung drehbar mit dem Substrat verbunden, so dass sie Drehschwingungen um einen Drehpunkt relativ zum Substrat ausführen kann.

Aus dem Stand der Technik sind mikromechanische Drehratensensoren bekannt, wobei generell zwischen entkoppelten und gekoppelten Sensoren unterschieden werden kann. Bei entkoppelten Sensoren weist die Schwingstruktur ein Antriebselement und ein davon mechanisch getrenntes Detektionselement auf. Das Antriebselement wird in einen üblicherweise stationären Bewegungszustand, die Antriebsschwingung, versetzt. Ein Übergreifen der Antriebsschwingung auf das Detektionselement wird durch geeignete Anordnung von das Antriebselement mit dem Detektionselement koppelnden Federelementen verhindert. Wirkt von außen eine Drehrate auf den Sensor, wird das Antriebselement neben der Antriebsschwingung zu einer weiteren Bewegung, der Erfassungsbewegung, angeregt. Diese wird in weiterer Folge über die Federelemente auf das Detektionselement übertragen, messtechnisch erfasst und ausgewertet.

Bei gekoppelten Sensoren wirkt die Schwingstruktur sowohl als Antriebs- als auch als Detektionselement. Sie kann gleichwohl einteilig oder mehrteilig ausgebildet sein, wird zu einer Antriebsschwingung angeregt und führt bei Einwirken einer äußeren Drehrate neben der Antriebsschwingung auch die Erfassungsbewegung aus.

Die US 5,869,760 offenbart einen gekoppelten mikromechanischen Coriolis-Drehratensensor mit einem Substrat, einer aus einem Ring und zwei flügelartigen Abschnitten bestehenden Schwingstruktur sowie einem Kammantrieb zum Anregen der Schwingstruktur. Diese ist über vier Feder- sowie Entlastungsbalken an vier mit dem Substrat verbundenen Ankern aufgehängt.

Aus der DE 103 20 725 A1 sowie der DE 199 15 257 A1 sind gekoppelte mikromechanische Bewegungssensoren bekannt, die eine flügelförmig ausgebildete Detektionseinheit aufweisen. Diese ist zentral an einem Substrat gelagert. Die zentrale Lagerung erfolgt mit mehreren radial verteilten, jeweils quer zur zu erfassenden Kipprichtung ausgerichteten Aufhängebalken, die an einem zentralen oder mehreren dezentralen Punkten an dem Substrat gelagert werden.

Die Detektionselnhelt führt aufgrund einer sensorintern erzeugten Anregung als Antriebsbewegung eine Drehschwingung um einen Drehmittelpunkt zusammenfallend mit der zentralen Lagerung parallel zum Substrat aus. Aufgrund einer äußeren, auf den Sensor einwirkenden Drehrate (in Richtung der oder um die Messachse) und dadurch erzeugter Coriolis-Kräfte erfährt die Detektionseinheit eine Drehimpulsänderung, die zu einer Kippbewegung derselben um eine zur Drehschwingachse/Anregungsachse und zur äußeren Drehrate senkrechte Achse (Detektionsachse) führt. Die Kippbewegung wird mittels einer kapazitiven Sensoranordnung detektiert, die durch die Detektionseinheit einerseits und dieser auf dem Substrat gegenüberliegende Kapazitäten andererseits gebildet wird. Die Sensoranordnung ist durch eine Mehrzahl von verteilt angeordneten Kapazitäten ausgebildet, um eine drehratenrichtungsabhängige Erfassung zu ermöglichen.

Zur Einstellung der Empfindlichkeit des Ansprechverhaltens in unterschiedlichen Richtungen offenbart die DE 199 15 257 A1, das Aspektverhältnis der Aufhängungsfedern oder -balken der Detektionseinheit geeignet zu dimensionieren. Durch eine gezielte Ausbildung des Aspektverhältnisses von in bestimmten Raumrichtungen angeordneten Aufhängungsbalken kann beispielsweise die Drehschwingung (Anregungsschwingung) der Detektionseinheit um die Anregungsachse sowie ein Verkippen um eine zur Anregungsachse senkrechte Detektionsachse ermöglicht werden, während ein Verkippen um eine zu diesen Achsen senkrechte Messachse im wesentlichen verhindert oder in gewünschter Weise eingeschränkt werden kann.

Zwar ist auf diese Weise eine Erfassung von Drehraten drehratenrichtungsspezifisch möglich, allerdings sind aus dem beschriebenen Stand der Technik bekannte Sensoren aufgrund ihrer zentralen Aufhängung gegenüber dem Einfluss externer Störgrößen wie Stoßbeschleunigungen oder Vibrationen störanfällig und oft nicht genügend robust. So kann es zu starken relativen Lageänderungen zwischen Detektionseinheit und Substrat kommen, die wiederum zu einem so genannten Sticking und Unbrauchbarkeit des Sensors führen können.

Ausgehend von dem zuvor beschriebenen Stand der Technik liegt der vorliegenden Erfindung die Aufgabe zugrunde, einen mikromechanischen Coriolis-Drehratensensor mit drehachsspezifisch ausbildbarem Ansprechverhalten bei ausreichender Empfindlichkeit gegenüber Drehraten um eine oder mehrere Drehrichtungen zu schaffen, der gleichzeitig in der Messrichtung oder den Messrichtungen (um eine Detektionsachse) gegenüber äußerer Schock- und Vibrationseinwirkung eine ausreichende Robustheit besitzt, um den Anforderungen der elektronischen Signalverarbeitung so weit wie möglich entgegenzukommen und insbesondere der Gefahr eines Stickings der Schwingstruktur am Substrat entgegen zu wirken.

Robustheit gegenüber mechanischen Störeinflüssen kann generell erreicht werden, indem die Resonanzfrequenzen der beweglichen Sensorstruktur auf Werte weitgehend außerhalb des akustischen Spektrums gehoben werden, wodurch der Sensor gegenüber Schocks und Vibrationen unempfindlicher wird. Eine solche Maßnahme wird aber im Allgemeinen mit einer Verringerung der Trägheitsmomente des Detektionselements, und damit einer Verkleinerung der detektierenden Sensorfläche, einhergehen müssen, so dass die erhöhte Robustheit mit einer geringeren Sensorsensitivität erkauft wird. Ein Hauptaspekt ist daher, ein Sensordesign zu kreieren, welches sich durch möglichst hohe Unempfindlichkeit gegenüber mechanischen Störeinflüssen auszeichnet und gleichzeitig die Sensitivität anderer Designs, welche dem gegenwärtigen Stand der Technik entsprechen, erreicht oder möglichst übertrifft.

Die Lösung der oben beschriebenen Aufgabe besteht in einem mikromechanischen Coriolis-Drehratensensor nach dem Oberbegriff des Anspruchs 1, der dadurch gekennzeichnet ist, dass wenigstens ein Paar zweiter Aufhängungen die Schwingstruktur mit dem Substrat verbindet und auf einander gegenüberliegenden Seiten des Drehpunktes angeordnet ist, wobei das wenigstens eine Paar zweiter Aufhängungen in einem größeren radialen Abstand zum Drehpunkt als die ersten, inneren Aufhängungen bzw. die zentrale Aufhängung angeordnet ist.

Zur Beschreibung des erfindungsgemäßen Drehratensensors wird im Folgenden beispielhaft ein zum Sensorsubstrat ortsfestes Kartesisches Koordinaten-Bezugssystem verwendet. Dessen Ursprung fällt mit dem Drehpunkt der am Substrat angeordneten Schwingstruktur zusammen. Seine Orientierung zum Sensor ist lediglich beispielhaft und nicht auf die gegebene Darstellung beschränkt. Die X-Achse und die Y-Achse des Bezugssystems sind parallel zur Substratebene in der Ebene der ruhenden (keine Erfassungsbewegung ausführenden) Schwingstruktur angeordnet. Die Z-Achse als Anregungsachse erstreckt sich orthogonal zur Substratebene, so dass die Schwingstruktur zur Durchführung einer Drehschwingung um die Z-Achse angeregt wird (Anregungsbewegung). Die zu messende Drehrate liegt (als pseudo-vektorielle Winkelgeschwindigkeit) in der X-Y-Ebene, z.B. parallel zur X-Achse, die in diesem Fall die Dreh- oder Messachse des Sensors darstellt. Die Messbewegung besteht dann in einer Kippschwingung der Schwingstruktur um die Y-Achse, die in diesem Fall die Detektionsachse ist. Im Falle eines nicht auf eine Messrichtung eingeschränkten Sensors fungieren die X- und die Y-Achse jeweils sowohl als Messachse als auch als Detektionsachse. Bei einer nicht parallel zur Y- oder X-Achse orientierten Drehrate wirken deren Beschleunigungsanteile jeweils in Richtung einer dieser Achsen und führen zu Auslenkungen um die jeweils andere Achse, so dass die X- und die Y-Achse gleichzeitig Mess- und Detektionsachse sein können.

Die vorliegende Erfindung betrifft sowohl gekoppelte als entkoppelte Drehratensensoren, ist jedoch in besonders vorteilhafter Weise bei gekoppelten Sensoren anwendbar. Die Schwingstruktur wirkt im Falle gekoppelter Sensoren als Detektionseinheit und führt sowohl Anregungs- als auch die Erfassungsbewegungen aus. Im Falle eines entkoppelten Sensors umfasst die Schwingstruktur üblicherweise sowohl eine Detektions- als auch eine Anregungseinheit, wobei die Anregungseinheit zum Durchführen der Anregungsbewegung angeregt wird und die Detektionseinheit die zu erfassende Detektionsbewegung ausführt.

In beiden der vorgenannten Fälle ist die Schwingstruktur erfindungsgemäß über die ersten, inneren Aufhängungen bzw. die zentrale Aufhängung und über wenigstens ein Paar zweiter, äußerer Aufhängungen mit dem Substrat gekoppelt, wobei das wenigstens eine Paar zweiter Aufhängungen in einem größeren radialen Abstand zum Drehpunkt als die ersten, inneren Aufhängungen angeordnet ist. Im Falle einer Verwendung einer zentralen Aufhängung anstelle erster, innerer Aufhängungen ergibt sich der größere radiale Abstand zum Drehpunkt zwangsläufig, da die zentrale Aufhängung im Drehpunkt angeordnet ist, demnach zu diesem einen gegen Null gehenden radialen Abstand besitzt.

Im Falle eines gekoppelten Sensors bedeutet das, dass die die Schwingstruktur ausbildende Detektionseinheit über die ersten, inneren Aufhängungen bzw. die zentrale Aufhängung und die zweiten, äußeren Aufhängungen mit dem Substrat verbunden ist. Im Falle eines entkoppelten Sensors kann dies für die Detektionseinheit gleichfalls zutreffen, allerdings kann alternativ oder zusätzlich die Angregungseinheit, die wie zuvor bereits dargestellt wurde, im Falle eines entkoppelten Sensors zusammen mit der Detektionseinheit die Schwingstruktur ausbildet, mit den besagten ersten, inneren Aufhängungen bzw. der zentralen Aufhängung und zweiten, äußeren Aufhängungen mit dem Substrat verbunden sein.

Sowohl die ersten, inneren Aufhängungen bzw. die zentrale Aufhängung, als auch die zweiten, äußeren Aufhängungen können jeweils über einen einzigen Aufhängungspunkt oder mehrere Aufhängungspunkte mit dem Substrat direkt oder über Aufhängungsstrukturen oder -elemente (Zapfen, Balken, etc.) mit dem Substrat indirekt gekoppelt sein. Aufhängungspunkte, -strukturen oder -elemente werden im Folgenden als Koppelstruktur bezeichnet. Mit der Koppelstruktur ist die Schwingstruktur elastisch verbunden, was die zuvor angeführten Bewegungen der Schwingstruktur relativ zum Substrat ermöglicht.

Die ersten, inneren Aufhängungen bzw. die zentrale Aufhängung sowie die zweiten, äußeren Aufhängungen können grundsätzlich beliebig ausgebildet sein. Wesentlich ist, dass die ersten, inneren Aufhängungen bzw. die zentrale Aufhängung die Anregungsbewegung (Drehschwingung um die Z-Achse) und gleichzeitig die Erfassungsbewegung(en) (Verkippen um die X- und/oder Y-Achse) ermöglichen. Sie können derart ausgebildet sein, dass lediglich die Anregungsbewegung in eine erste Richtung und eine Erfassungsbewegung in eine weitere Richtung möglich ist (Sensor mit nur einer Messrichtung). Vorzugsweise erfolgt dies durch eine achssymmetrische Ausbildung oder Anordnung der ersten, inneren Aufhängungen, beispielsweise indem diese paarweise einander gegenüber liegend beiderseits des Drehpunkts angeordnet sind. Allerdings sind auch Erfassungsbewegungen in zwei Raumrichtungen möglich, z.B. indem die ersten, inneren Aufhängungen bezüglich dieser Richtungen punktsymmetrisch zum und möglichst nahe am Drehpunkt angeordnet sind bzw. eine zentrale Aufhängung verwendet wird. Der Sensor weist dann ein richtungsunabhängiges oder drehachsunspezifisches Ansprechverhalten auf. Ohne weitere zweite, äußere Aufhängungen riefe eine Einwirkung einer Drehrate bestimmter Größe unabhängig von deren Drehrichtung relativ zum Sensor immer eine Erfassungsbewegung entsprechender, gleicher Größe hervor. Die Richtung der Auslenkung der Schwingstruktur hinge dabei nur von der Orientierung der Drehrate zum Sensor ab.

Die zweiten, äußeren Aufhängungen dienen unabhängig von der spezifischen Ausgestaltung der ersten, inneren Aufhängungen bzw. der zentralen Aufhängung dem Zweck, das Ansprechverhalten und die Messempfindlichkeit des Sensors auf aus fertigungstechnischer Sicht einfache Weise drehachsspezifisch auszubilden. Die zweiten, äußeren Aufhängungen beeinflussen die Anregungsbewegung der Schwingstruktur vorzugsweise nicht oder nur unwesentlich. Ihre Wirkung beschränkt sich vorzugsweise auf die Erfassungsbewegung(en) in der Messrichtung bzw. den Messrichtungen. Durch entsprechende Abstimmung von Anzahl und Ausbildung der zweiten, äußeren Aufhängungen und Ort deren Platzierung bezüglich des Drehpunkts kann die relative Beweglichkeit zwischen Schwingstruktur und Substrat individuell richtungsbezogen eingestellt werden. Hierdurch wird die Messempfindlichkeit des Sensors richtungsspezifisch ausgebildet, so dass dieser ein drehachsspezifisches Ansprechverhalten aufweist. Des Weiteren kann die Resonanzfrequenz des Sensors richtungsspezifisch ausgebildet, also erhöht oder verringert, werden, ohne dass es hierzu einer Veränderung, z.B. Verringerung, des Trägheitsmoments der Schwingstruktur mit daraus resultierender Verringerung der Sensitivität bedürfte. Beispielsweise können durch Anordnung der zweiten, äußeren Aufhängungen die Resonanzfrequenzen der Schwingstruktur bei Bewegungen um die Z-Achse sowie die Y-Achse in kontrollierter Weise beeinflusst werden, während eine Bewegung um die X-Achse durch die Anordnung der inneren Aufhängungen weitgehend eingeschränkt ist, wodurch die Zahl der Freiheitsgrade auf zwei reduziert ist. Durch entsprechende Dimensionierung können sowohl die Arbeitsfrequenzen wie auch die parasitären Resonanzen der Schwingstruktur ohne wesentlichen Empfindlichkeitsverlust beeinflusst werden, wodurch der Sensor bei ausreichender Sensitivität insbesondere in Messrichtung unempfindlich gegenüber mechanischen Störeinflüssen ist.

Die zweiten Aufhängungen liegen vorzugsweise auf durch den Massenschwerpunkt der Schwingstruktur 2 verlaufenden Geraden einander diametral gegenüber. Im Falle eines Paars zweiter Aufhängungen ist diese Gerade vorzugsweise deckungsgleich mit einer der Achsen des sensorfesten Bezugssystems. Auch ist möglich, dass mehr als ein Paar zweiter Aufhängungen verwendet wird, wobei diese vorzugsweise symmetrisch bezüglich der X-Achse als auch symmetrisch bezüglich der Y-Achse angeordnet sind. Die zweiten Aufhängungen sind im Allgemeinen nicht (durch Stege oder dergleichen) untereinander verbunden, sondern besitzen jeweils zum Substrat eine direkte elastische Verbindung. Mit besonderem Vorteil sind sie des Weiteren unabhängig voneinander in eigenen Ausnehmungen innerhalb der Schwingstruktur platziert und bezüglich des spezifizierten Drehzentrums symmetrisch. Eine Anordnung am Außenbereich der Schwingstruktur ist jedoch gleichfalls möglich. Zweite, äußere Aufhängungen, welche innerhalb der Fläche der Schwingstruktur platziert sind, gehen vorzugsweise mit einer Ausnehmung in der Schwingstruktur einher, welche die jeweilige Aufhängung mit hinreichend viel Spielraum aufnimmt, um die funktionsgemäßen Drehschwingungen der Sensorstruktur nicht zu behindern. Vorzugsweise fällt das Drehzentrum der Schwingstruktur mit deren Massenschwerpunkt zusammen.

Nach einem weiteren Vorschlage der Erfindung weist jede erste, innere bzw. zweite, äußere Aufhängung mindestens ein Federelement, vorzugsweise ein Balkenfederelement oder einen Biegebalken, auf, welches einerseits an der Schwingstruktur und andererseits direkt an dem Substrat oder einer starr mit diesem verbundenen Koppelstruktur ansetzt. Gemäß einem weiteren Vorschlag sind die Federelemente der ersten inneren und/oder zweiten, äußeren Aufhängung im Bereich ihrer Ansätze an der Schwingstruktur sowie dem Substrat oder dessen Koppelstrukturen verzweigt, bilden insbesondere mehrere Arme aus. Vorzugsweise sind die Ansatzstellen mit einer Verrundung ausgebildet, die insbesondere ellipsenförmig sein kann. Auf diese Weise werden die Ansatzbereiche der Federelemente möglichst groß ausgebildet, wodurch innere Spannungen minimiert werden. Gleichzeitig wird durch die Verzweigung wenig Material benötigt, so dass eine hohe Belastungskapazität bei möglichst geringem Gewicht erzielt werden kann. Vorzugsweise sind die vom Drehzentrum der Schwingstruktur entfernten Enden der Federelemente mit der Schwingstruktur verbunden, während die gegenüber und somit weiter innen, liegenden Enden der Federelemente mit dem Substrat oder dessen Koppelstruktur verbunden sind.

Damit es aufgrund der Drei- oder Mehrfachfixierung der Detektionseinheit oder Schwingstruktur am Substrat beispielsweise bei temperaturbedingten Verformungen möglichst nicht zu einer Veränderung der Sensorcharakteristik kommt, ist nach einer besonders vorteilhaften Ausführungsform der Erfindung vorgesehen, dass die Federelemente der zweiten Aufhängungen jeweils einen Verformungen in ihre Längsrichtung ausgleichenden Bereich aufweisen. Verkrümmungen oder Verzerrungen des Substrats und/oder der Detektionseinheit oder Schwingstruktur könnten ohne derartige Bereiche die Lagen der Fixierungspunkte der Federelemente relativ zur ersten, inneren Aufhängung verändern, so dass es zu einer Veränderung der Federcharakteristika kommen kann und/oder sich die Ruhelage der Detektionseinheit oder Schwingstruktur relativ zum Substrat verändern kann, wodurch der Temperaturgang des Sensors negativ beeinflusst wird. Durch die mit der Erfindung vorgeschlagenen, Verformungen in der Längsrichtung der Federelemente ausgleichenden Bereiche werden Spannungen, die aufgrund einer Relativverschiebung der Fixierungspunkte in die Federelemente eingeleitet werden, verringert oder sogar gänzlich neutralisiert. Die Bereiche wirken als Puffer, die Verspannungen abfedern bzw. auffangen. Es hat sich herausgestellt, dass die Federelemente in den Bereichen in besonders vorteilhafter Weise mäanderförmig, U-förmig, C-förmig oder ringförmig ausgebildet sind, wobei daneben andere Formgebungen möglich sind, die einen Spannungsabbau von durch Relativverschiebungen der Fixierungspunkte hervorgerufenen Spannungen ermöglichen. Durch die Verwendung derartiger Bereiche können durch Relativverschiebungen verursachte Änderungen in den Resonanzfrequenzen des Sensors um den Faktor 10 gegenüber einer reinen Balkenfeder reduziert werden.

Gemäß einer bevorzugten Ausführungsform besteht die Schwingstruktur aus einer im Wesentlichen starren Platte, die im Falle eines gekoppelten Sensors sowohl die Funktion des Antriebs- als auch des Erfassungselements in sich vereint. Vorzugsweise weist sie in einer besonderen Ausführungsform zwei flügelartige Ausformungen auf. Diese dienen dazu, die Sensitivität des Sensors bei der Erfassung einer Drehrate zu erhöhen. Soll beispielsweise eine Rotation des Sensors um die X-Achse eines Inertialsystems erfasst werden, das zu einem gegebenen Zeitpunkt achsparallel mit dem ortsfesten Sensorsystem ist, sind die flügelartigen Ausformungen in Richtung der X-Achse, vorzugsweise beiderseits der Y-Achse, ausgebildet.

Nach einer weiteren Ausführungsform setzen an der Schwingstruktur radial nach außen gerichtete Kammbalken an, an welchen Elektroden sitzen oder die solche bilden, die zusammen mit weiteren, feststehenden Kammbalken Kapazitäten bilden. Diese werden mit einer elektrischen Wechselspannung geeigneter Frequenz beschickt, wodurch die Antriebs-Drehschwingung der Schwingstruktur um die Z-Achse angeregt wird. Liegt eine Drehrate mit Anteil parallel zur X-Achse an, wird, wie oben erwähnt, die Erfassungsbewegung angeregt. Die Schwingstruktur beschreibt hierbei eine Kippschwingung um die Y-Achse des Bezugssystems, welche durch Elektroden, die durch die Schwingstruktur selbst und Teile des darunter liegenden Substrats gebildet werden, kapazitiv erfasst wird. Die räumliche Entfernung der Fixierungspunkte vom Drehpunkt ist ein wesentlicher Designparameter: Die Auswirkungen der aufgrund der flügelartigen Ausformungen hohen Trägheitsmomente der Schwingstruktur - im vorliegenden Beispiel um die Y- und die Z-Achse des Sensor-Bezugssystems - wie etwa niedrige Resonanzfrequenzen der Schwingungen um diese Achsen, können durch die außen angeordneten zweiten Aufhängungen in kontrollierter Weise kompensiert werden. Des Weiteren wirken die vom Drehzentrum weg nach außen hin platzierten Aufhängungen zu großen Auslenkungen der beweglichen Sensorstruktur, insbesondere bei nicht vernachlässigbaren elastischen Verformungen der Schwingstruktur, entgegen. Auf diese Weise wird auch einer möglichen Neigung zu adhäsigem Anhaften ("Sticking") der Schwingstruktur am Substrat entgegengewirkt.

Eine besonders kompakte und robuste Ausführungsform des Sensors ergibt sich, wenn gemäß einem weiteren Vorschlag der Erfindung die Federelemente der zweiten Aufhängungen in Ausnehmungen in den flügelartigen Ausformungen angeordnet sind. Vorzugsweise ist dabei das von der ersten, inneren Aufhängung entfernte Ende der Federelemente mit der Schwingstruktur verbunden, während das gegenüberliegende Ende mit dem Substrat verbunden ist. Ein derartiger Sensor besitzt für eine Erfassung von Drehraten um eine Dreh- oder Messachse eine große Sensitivität, während durch die Federelemente eine übermäßige Auslenkung der Schwingstruktur um die Detektionsachse verhindert wird. Gleichzeitig können die Resonanzfrequenzen des Systems bei einer Auslenkung der Schwingstruktur um die Detektionsachse relativ zum Substrat auf Werte außerhalb des akustischen Spektrums, zumindest aber auf einen Wert oberhalb von 10 kHz, gehoben werden, wodurch der Sensor gegenüber unerwünschten störenden Umwelteinflüssen, die meist im akustischen Bereich liegen, wie Schock oder Vibrationen im wesentlichen unempfindlicher wird. Des Weiteren wird einem durch äußere Schockeinwirkung verursachtes Aufschlagen der Schwingstruktur in der Messmode, mit allen damit verbundenen negativen Konsequenzen, entgegengewirkt.

Weitere Vorteile und Ausführungsformen der vorliegenden Erfindung ergeben sich aus der nachfolgenden, nicht beschränkenden Beschreibung eines Ausführungsbeispiels anhand der Figuren. Dabei zeigen:
- **Figur 1**: eine schematische Aufsicht auf eine erste bevorzugte Ausführungsform des Sensors mit einem Paar erster, innerer Aufhängungen,
- **Figur 2**: eine schematische Schnittansicht entlang der Linie II-II der Figur 1,
- **Figur 3**: eine vergrößerte Aufsicht der entlang der Y-Achse angeordneten ersten, inneren Aufhängungen des Sensors der Fig. 1,
- **Figur 4**: eine vergrößerte Aufsicht eines entlang der X-Achse innerhalb des rechten Flügels angeordneten Federelements mit Aufhängepunkt und mäanderförmiger Pufferzone des Sensors der Fig. 1,
- **Figur 5**: eine schematische Aufsicht auf eine zweite bevorzugte Ausführungsform des Sensors mit zentraler Aufhängung,
- **Figur 6**: eine schematische Schnittansicht entlang der Linie VI-VI der Figur 5,
- **Figur 7**: eine vergrößerte Aufsicht der entlang der Y-Achse angeordneten zentralen Aufhängung des Sensors der Fig. 5 und
- **Figur 8**: eine vergrößerte Aufsicht eines entlang der X-Achse innerhalb des rechten Flügels angeordneten Federelements des Sensors der Fig. 5.

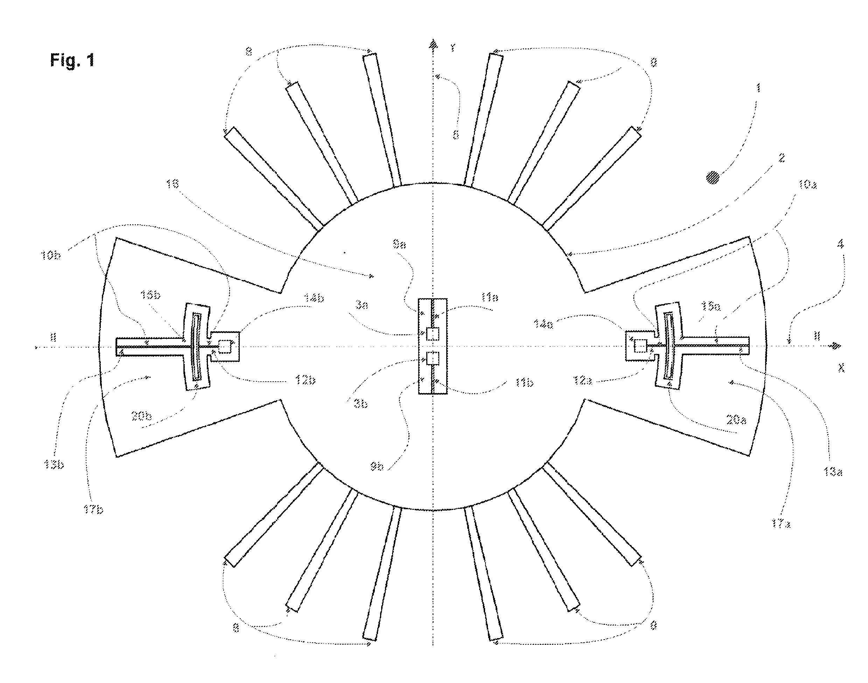

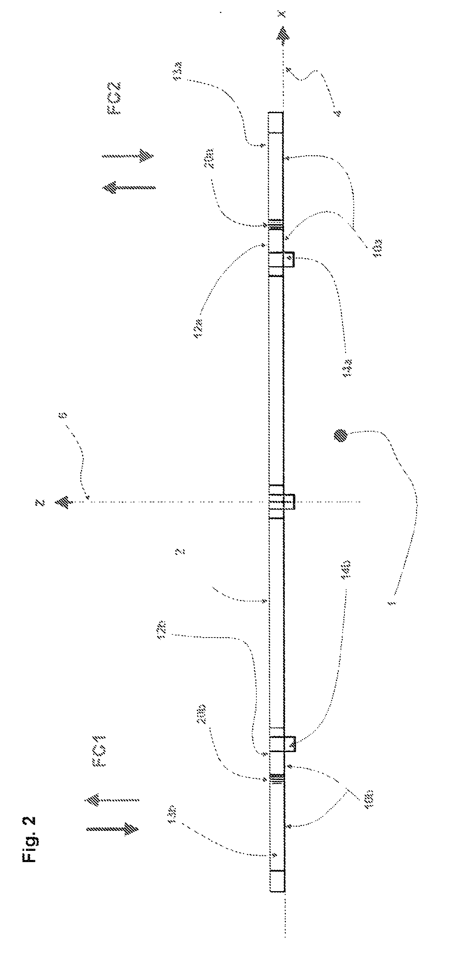

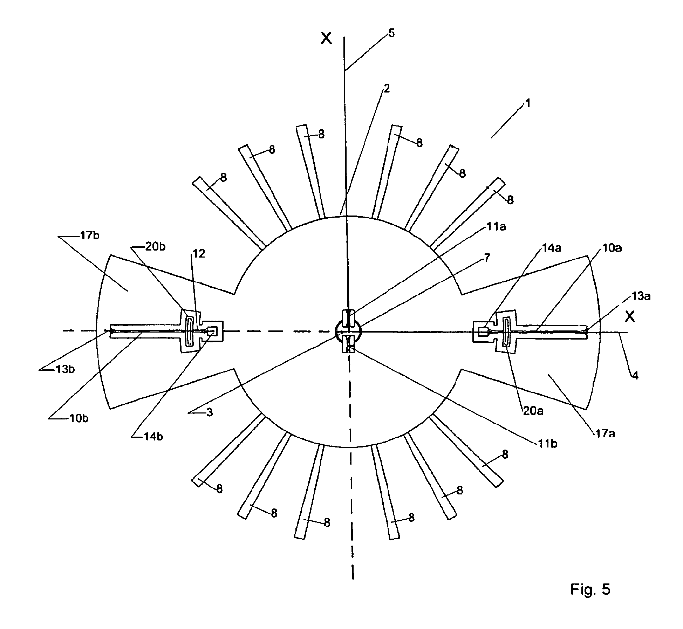

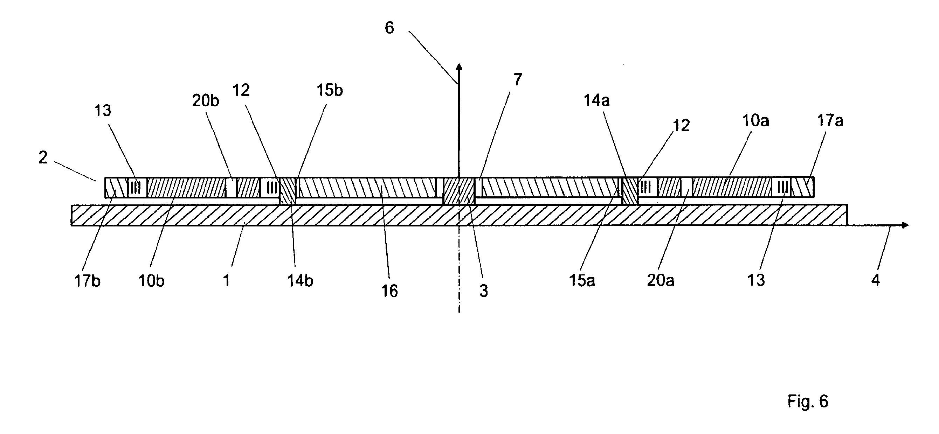

Bei der nachfolgenden Beschreibung der Ausführungsbeispiele und in den Figuren sind gleiche Elemente und Funktionseinheiten der Sensoren mit gleichen Bezugszeichen sowie Bezeichnungen versehen. Das in den Figuren angedeutete Kartesische Koordinatensystem stellt das in der allgemeinen Beschreibung der Erfindung angegebene Sensor-Bezugssystem dar. Dessen Z-Achse (6 in Fign. 2 und 6) erstreckt sich in den Fign. 1 und 5 senkrecht aus der Zeichnungsebene hinaus in Richtung des Betrachters. Die genaue Lage des Koordinatenursprungs ergibt sich aus der Zusammenschau der Fign. 1 und 2 bzw. 5 und 6. Im Folgenden wird die X-Achse 4 als Messachse 4, die Y-Achse 5 als Detektionsachse 5 und die Z-Achse 6 als Antriebsachse 6 bezeichnet.

Der in der Fig. 1 in einer Aufsicht dargestellte Sensor eines ersten Ausführungsbeispiels weist ein Substrat 1 als Grundelement auf, wie es aus dem Stand der Technik hinreichend bekannt ist. Relativ zum Substrat 1 ist eine Schwingstruktur 2 an paarweise einander gegenüberliegender Aufhängepunkten in Form von Lagerzapfen 3a,3b,14a,14b als Koppelstrukturen gelagert. Die Lagerzapfen 3a,3b bilden zusammen mit Federelementen 11 a,11 b entlang der Y-Achse 5 erste, innere Aufhängungen 3a,3b,11a,11b aus, wohingegen die Lagerzapfen 14a,14b mit Federelementen 10a,10b entlang der X-Achse 4 zweite, äußere Aufhängungen 14a,14b,10a,10b ausbilden. Die Federelemente 10a,10b,11a,11b verbinden die Schwingstruktur 2 mit den Lagerzapfen 3a,3b,14a,14b.

Die Schwingstruktur 2 ist spiegelsymmetrisch sowohl zur Detektionsachse 5 als auch zur Messachse 4 ausgebildet. Sie ist des Weiteren punktsymmetrisch zum Drehzentrum der Schwingstruktur 2, welches mit dem Ursprung des Koordinatensystems zusammenfällt. Sie weist einen im wesentlichen kreisförmigen Grundkörper 16 auf, an dem seitlich in Richtung der Messachse 4 flügelartige Ausformungen, im Folgenden als Flügel 17a,17b bezeichnet, angeordnet sind. Zwischen den Flügeln 17a,17b sind beidseits des Grundkörpers 16 der Schwingstruktur 2 schematisch angedeutete Antriebskämme 8 angeordnet, über die die Schwingstruktur in eine Drehschwingung um die Antriebsachse versetzt wird.

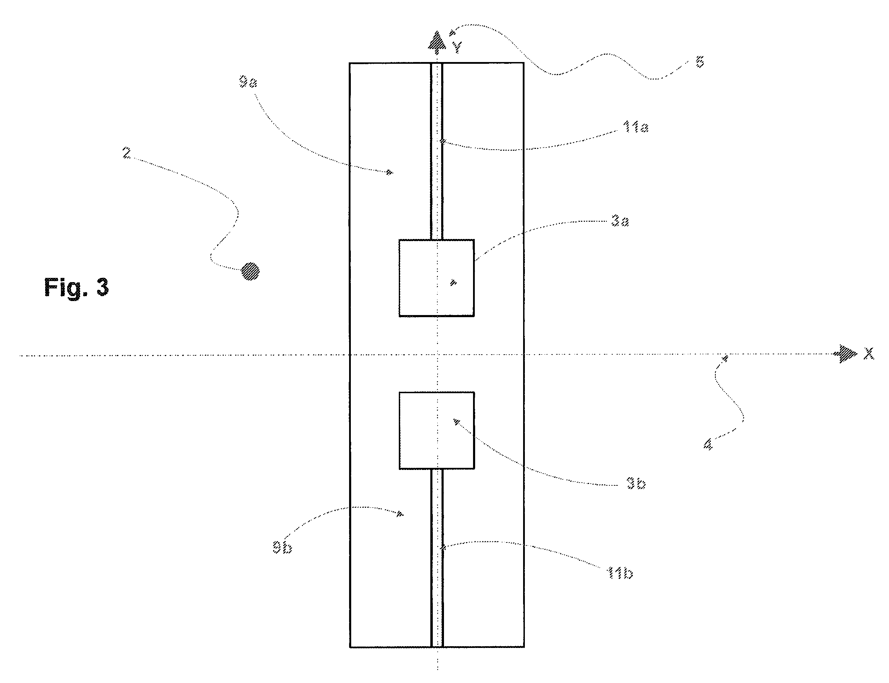

In der Fig. 3 sind die entlang der Detektionsachse 5 angeordneten Lagerzapfen 3a,3b samt daran fixierten Federn 11a,11b vergrößert dargestellt. Die Lagerzapfen 3a,3b sind fest mit dem darunter liegenden Substrat 1 verbunden und erheben sich vom Substrat in Richtung der positiven Antriebsachse 6. Für je eine aus Federelement 11a,11b und Lagerzapfen 3a,3b bestehende Aufhängung 3a,11 a und 3b, 11 b sind Aussparungen 9a,9b in der Schwingstruktur 2 vorgesehen. Die Federelemente 11 a,11 b sind an den den Lagerzapfen 3a,3b entgegen gesetzten Enden mit der Schwingstruktur 2 verbunden. Die Federelemente 11 a,11 b ermöglichen aufgrund ihrer Gestalt die Rotationsschwingung der Schwingstruktur 2 relativ zum Substrat 1 um die Antriebsachse 6 (Antriebsbewegung), sowie eine Rotationsschwingung der Schwingstruktur 2 relativ zum Substrat 1 um die Detektionsachse 5 (Erfassungsbewegung), wohingegen eine Rotationsschwingung um die Messachse 4 der Schwingstruktur 2 relativ zum Substrat 1 unterbunden oder im Wesentlichen verhindert wird.

Während des Betriebes wird die Schwingstruktur 2 mittels der Antriebskämme 8 in eine Rotationsschwingung relativ zum Substrat 1 um die Antriebsachse 6 versetzt. Kommt es nun zu einer Drehung des gesamten Sensors um die Messachse 4, so treten zusätzlich periodische Coriolis-Kräftepaare auf, welche in der Fig. 2 durch F_{c1} und F_{c2} symbolisiert sind. Diese Kräfte wirken auf die gesamte bewegliche Sensorstruktur 2 und dabei am stärksten im Bereich der Flügel 17a,17b in der durch die Antriebsachse 6 und die Messachse 4 gebildeten Ebene. Das mit den Coriolis-Kräftepaaren einhergehende Coriolis-Moment erregt somit die Meßmoden-Drehschwingung der Schwingstruktur 2 um die Detektionsachse 5. Die damit einhergehende relative Lageänderung der Schwingstruktur 2 relativ zum Substrat 1 ist mittels in den Figuren nicht dargestellten Messelektroden, die sich vorzugsweise im Bereich unterhalb der Flügel 17a,17b sowie ggf. teilweise oder ganz unterhalb der inneren, diskusförmigen Scheibe befinden, messtechnisch erfassbar.

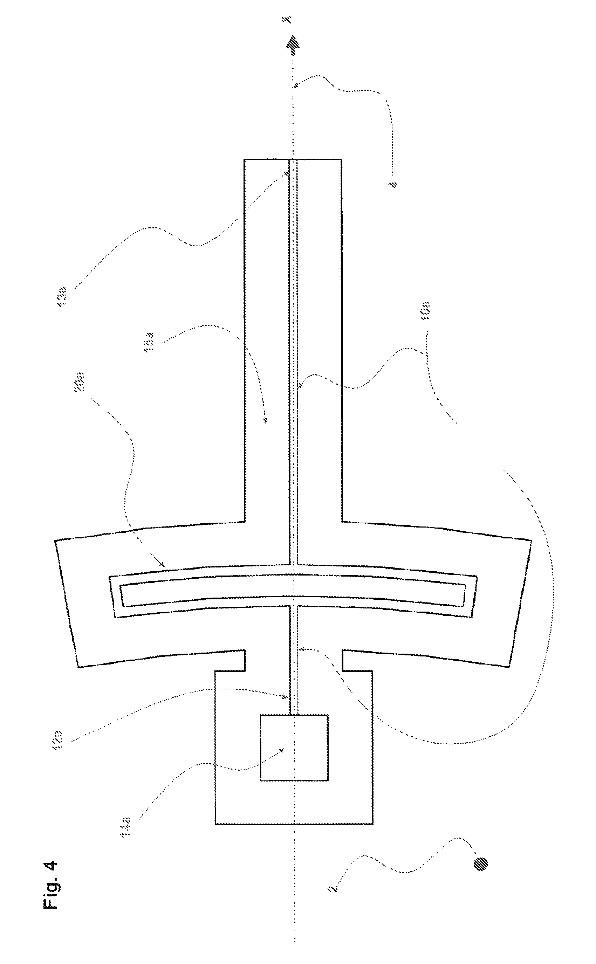

Neben der Verbindung über die Aufhängungen 3a,3b,11a,11b ist die Schwingstruktur 2 mittels zweier weiterer, äußerer Aufhängungen, bestehend jeweils aus Lagerzapfen 14a,14b und daran hängender Horizontalfedern 10a,10b mit C-förmigen Pufferzonen 20a,20b, mit dem Substrat 1 verbunden, siehe Fig. 4. Die Horizontalfedern 10a,10b sind innerhalb des Bereichs der Flügel 17a,17b der Schwingstruktur 2 angeordnet. Die Flügel 17a,17b weisen zu diesem Zweck jeweils eigene Aussparungen 15a,15b auf, in denen die Horizontalfedern 10a,10b samt Pufferzonen 20a,20b und Lagerzapfen 14a,14b aufgenommen sind. Die Horizontalfedern 10a,10b sind vorzugsweise mit ihren den Lagerzapfen 14a,14b entgegen gesetzten Enden 13a,13b mit der Schwingstruktur 2 verbunden, während sie mit den anderen Enden 12a,12b an den Lagerzapfen 14a,14b fixiert sind. Ähnlich wie die Lagerzapfen 3a,3b sind die Lagerzapfen 14a,14b fest mit dem Substrat 1 verbunden.

Die Horizontalfedern 10a,10b sind jeweils in Form eines Biegebalkens ausgebildet. Ihr Aspektverhältnis kann beliebig sein, ist vorzugsweise jedoch hoch ausgebildet. In der gezeigten Ausführungsform besitzen die Horizontalfedern 10a,10b einen im Wesentlichen rechteckigen Querschnitt, dessen Breite in Richtung der Detektionsachse 5 kleiner als dessen Höhe in Richtung der Antriebsachse 6 ist.

Die innerhalb der Flügel 17a,17b platzierten Horizontalfedern 10a,10b mit Lagerzapfen 14a,14b dienen in erster Linie dazu, die Auswirkungen der hohen Trägheitsmomente der Schwingstruktur 2 um die jeweiligen Raumachsen zu kompensieren. Durch diese Maßnahme werden zwei Effekte erreicht : 1) Die mechanischen (sowohl funktionsgemäßen als auch parasitären) Eigenfrequenzen der bewegten Sensorstruktur können auf hohe Werte, z.B. über 10 kHz (bei geeigneter Federdimensionierung bis über 20 kHz), angehoben werden, so dass von außen kommende, parasitäre Vibrationen im akustischen Frequenzbereich nur mehr sehr schwach in die Messbewegung der Schwingstruktur einkoppeln; und 2), die Horizontalfedern mit ihrer Innenaufhängung verhindern weitgehend ein durch äußere Schockimpulse verursachtes Aufschlagen verbunden mit einem adhäsiven Anhaften ("sticking") der Detektionseinheit 2 am darunter liegenden Substrat 1.

Die Horizontalfedern 10a,10b sind bei den Sensoren der Ausführungsbeispiele nicht als durchgehende Biegebalken gleichen Querschnitts ausgebildet. Vielmehr weisen sie einen Bereich 20a,20b als Puffer auf, in dem in die Feder eingeleitete Spannungen in deren Längsrichtung - d.h. in Richtung der Messachse 4 - abgebaut werden können. In den dargestellten bevorzugten Ausführungsformen ist dieser Bereich 20a,20b als beidseits der Federlängsachse ausgebildete, näherungsweise C-förmige Auskragung realisiert. Kommt es beispielsweise aufgrund von stressinduzierten Verformungen des Substrats zu einer relativen Lageänderung zwischen den Lagerzapfen 14a,14b, können diese über eine elastische Verformung der Horizontalfedern 10a.10b in den Bereichen 20a,20b ausgeglichen werden, ohne die Federcharakteristik der Horizontalfedern 10a,10b bei Biegungen um die Detektionsachse 5 sowie bei Biegungen um die Antriebsachse 6 wesentlich zu verändern. Durch die Verwendung derartiger Pufferzonen in den Federn können durch Relativverschiebungen der Fixierungspunkte verursachte Änderungen der Resonanzfrequenzen um den Faktor 10 gegenüber einem Sensor mit geraden Balkenfedern reduziert werden. Aufgrund der im bevorzugten Ausführungsbeispiel relativ nahe aneinander liegenden Lagerzapfen 3a,3b erübrigen sich solche Pufferbereiche für die ersten, inneren Aufhängungen.

In der Fig. 5 ist ein zweites Ausführungsbeispiel des Sensors in einer schematischen Aufsicht dargestellt, bei dem die Schwingstruktur 2 anstelle mittels der ersten, inneren Aufhängungen 3a,3b,11a,11b mittels einer zentralen Aufhängung 3,11a,11b gelagert ist.

Die zentrale Aufhängung fällt mit dem Massemittelpunkt der Schwingstruktur 2 zusammen und liegt im Ursprung des Koordinatensystems.

Die Schwingstruktur 2 ist wie bei dem ersten Ausführungsbeispiel spiegelsymmetrisch sowohl zur Detektionsachse 5 als auch zur Messachse 4 ausgebildet. Sie ist des weiteren punktsymmetrisch zur zentralen Aufhängung 3,11a,11b. Im Übrigen gleicht sie im Wesentlichen der Schwingstruktur 2 des ersten Ausführungsbeispiels, auf dessen Erläuterungen Bezug genommen wird.

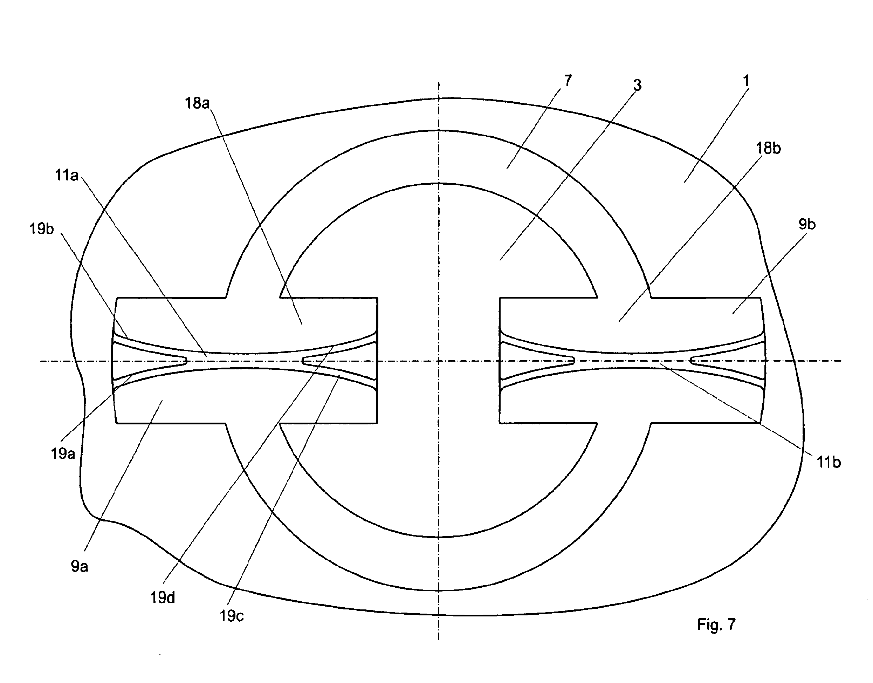

In der Fig. 7 ist die zentrale Aufhängung 3,11a,11b vergrößert dargestellt. Sie besteht aus dem fest mit dem Substrat 1 verbundenen Anker 3, der sich von dem Substrat 1 in Richtung der Anregungsachse 6 erhebt. Der Anker 3 weist einen im Wesentlichen kreisförmigen Querschnitt auf, wobei in Richtung der Detektionsachse 5 einander gegenüberliegend Aussparungen 18a,18b eingebracht sind. Die Schwingstruktur 2 weist eine zentrale Durchgangsöffnung 7 auf. Diese ist gleichfalls im Wesentlichen kreisförmig mit in Richtung der Detektionsachse 5 eingebrachten Aussparungen 9a,9b. Die zentrale Durchgangsöffnung 7 der Schwingstruktur 2 besitzt einen größeren Durchmesser als der Anker 3, so dass die Schwingstruktur 2 relativ zu dem Substrat 1 weitgehend ungehindert um den Anker 3 Drehschwingungen ausführen kann. Die Aussparungen 9a,9b der Schwingstruktur 2 und die Aussparungen 18a,18b des Ankers 3 liegen einander gegenüber. Zwischen diesen Aussparungen sind die Ankerfedern 11 a,11 b angeordnet und jeweils endseitig mit dem Anker 3 einerseits sowie der Schwingstruktur 2 andererseits verbunden. Die Ankerfedern 11a,11b ermöglichen aufgrund ihrer Gestalt die Rotationsschwingung der Schwingstruktur 2 relativ zum Substrat 1 um die Anregungsachse 6, sowie eine Rotationsschwingung der Schwingstruktur 2 relativ zum Substrat 1 um die Detektionsachse 5, wohingegen eine Rotationsschwingung um die Messachse 4 der Schwingstruktur 2 relativ zum Substrat 1 unterbunden oder im Wesentlichen verhindert wird.

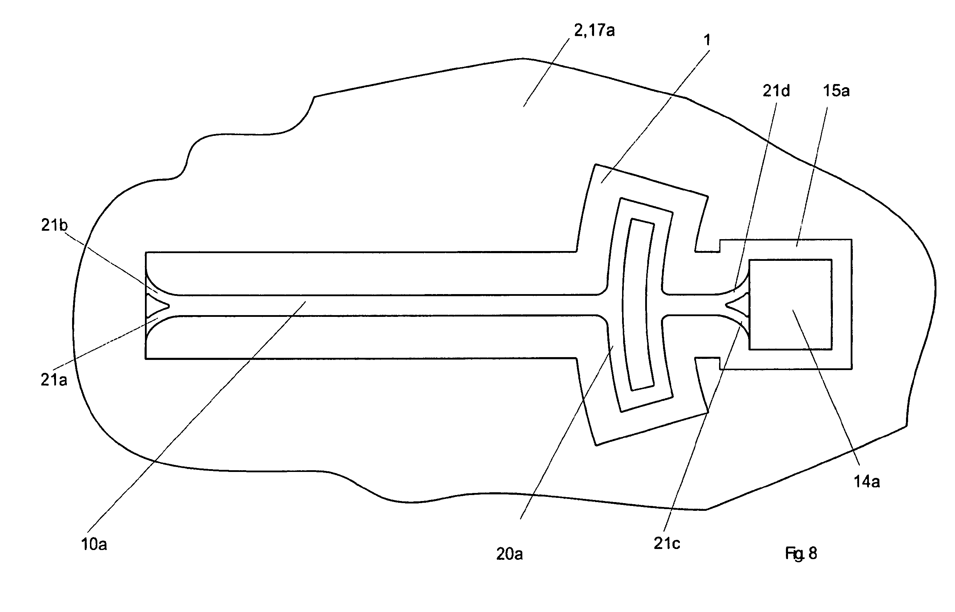

Bei dem zweiten Ausführungsbeispiel sind sowohl die Ankerfedern 11 a,11 b als auch die Horizontalfedern 10a,10b - wie insbesondere den Fign. 7 und 8 zu entnehmen ist - mit einer Verzweigung 19a,19b,19c,19d; 21a,21b,21c,21d an den jeweiligen Federansatzstellen versehen. Des Weiteren sind die Federansatzstellen, d.h. die Endbereiche der Federn, ellipsenförmig verrundet. Auf diese Weise werden die in den Federn vorliegenden Spannungen, insbesondere die Maximalspannungen, in den Ansatzbereichen auf ein größeres Areal verteilt, ohne gleichzeitig die Steifigkeit der Federn zu sehr zu erhöhen. Die Ansatzstellen der Federn an den jeweils angrenzenden Bereichen der Detektionseinheit 2 bzw. des zentralen Ankers 3 oder der Außenanker 14a,14b laufen in einer abgerundeten Form ineinander über, was gleichfalls zu einer Spannungsverminderung in den Federansätzen sowie den an diesen angrenzenden Strukturen führt. Insgesamt wird durch diese Formgebung der Federendbereiche die Bruchgefahr in diesen Zonen reduziert, was zu einer verbesserten Haltbarkeit des gesamten Sensors führt. Diese Formgebung der Federansätze kann auch bei einem Sensor nach dem ersten Ausführungsbeispiel gegeben sein.

## Patentansprüche

1. Mikromechanischer Drehratensensor zur Erfassung einer Drehrate um eine Messachse (4) (x-Achse), aufweisend:
ein Substrat (1),
eine Detektionseinheit (2) und
Mittel zum Erzeugen einer Drehschwingung der Detektionseinheit um eine zur Messachse (4) orthogonale Anregungsachse (5) (Z-Achse),
wobei die Detektionseinheit (2) mittels einer zentralen Aufhängung (3,11a,11b) drehbar mit dem Substrat (1) verbunden ist,
so dass die Detektionseinheit (2) eine Detektionsbewegung um eine zur Messachse orthogonale Detektionsachse (Y-Achse) als Drehschwingung um die zentrale Aufhängung (3,11a,11b) relativ zum Substrat (1) ausführen kann,
wobei die Detektionseinheit (2) und das Substrat (1) mittels wenigstens zweier zweiter Aufhängungen (10a,10b;14a,14b) zur Ausbildung eines drehachsspezifischen Ansprechverhaltens miteinander verbunden sind,
wobei die zweiten Aufhängungen (14a,14b,10a,10b) jeweils wenigstens ein Federelement (10a,10b) umfassen,
**dadurch gekennzeichnet, dass**
die zentrale Aufhängung im Drehpunkt der Detektionseinheit angeordnet ist und die Federelemente (10a,10b) jeweils einen Verformungen in ihre Längsrichtung ausgleichenden Bereich (20a,20b) aufweisen.

2. Mikromechanischer Drehratensensor nach Anspruch 1, **dadurch gekennzeichnet, dass** die zwei zweiten Aufhängungen auf einander gegenüberliegenden Seiten des Drehpunkts angeordnet sind.

3. Mikromechanischer Drehratensensor nach Anspruch 1 oder 2, **dadurch gekennzeichnet, dass** die zweiten, äußeren Aufhängungen (10a,1Db;14a,14b) auf einer durch die zentrale Aufhängung (3,11a,11b) verlaufenden Geraden einander diametral gegenüber liegen.

4. Mikromechanischer Drehratensensor nach einem der vorhergehenden Ansprüche, **dadurch gekennzeichnet, dass** wobei wenigstens eines der Federelemente (10a,10b) als Biegebalken ausgebildet ist.

5. Mikromechanischer Drehratensensor nach einem der vorhergehenden Ansprüche, **dadurch gekennzeichnet, dass** der Verformungen ausgleichende Bereich (20a,20b) mäanderförmig, U-förmig, C-förmig oder ringförmig ausgebildet ist.

6. Mikromechanischer Drehratensensor nach einem der vorhergehenden Ansprüche, **dadurch gekennzeichnet, dass** wenigstens eines der Federelemente (10a,10b) in Richtung der aufgrund der zu detektierenden Drehrate hervorgerufenen Auslenkung eine höhere Federsteifigkeit als in einer hierzu orthogonalen Richtung aufweist.

7. Mikromechanischer Drehratensensor nach einem der vorhergehenden Ansprüche, **dadurch gekennzeichnet, dass** die Federelemente (10a,10b) jeweils einen im wesentlichen rechteckigen Querschnitt mit einem hohen Aspektverhältnis aufweisen.

8. Mikromechanischer Drehratensensor nach einem der vorhergehenden Ansprüche, **dadurch gekennzeichnet, dass** die Federelemente (10a,10b) an ihrem radial von der zentralen Aufhängung (3,11a,11 b) entfernten Enden (13a,13b) mit der Detektionseinheit (2) verbunden sind.

9. Mikromechanischer Drehratensensor nach einem der vorhergehenden Ansprüche, **dadurch gekennzeichnet, dass** die Federelemente (10a,10b) mit ihrem mit der Detektionseinheit (2) verbundenen Ende (13) gegenüberliegenden Ende (12) vorzugsweise Über Außenanker (14a,14b) mit dem Substrat (1) verbunden sind,

10. Mikromechanischer Drehratensensor nach einem der vorhergehenden Ansprüche, **dadurch gekennzeichnet, dass** die Federelemente (10a,10b) im Bereich ihrer Ansätze an der Detektionseinheit (2) und/oder dem Substrat (1) verzweigt sind.

11. Mikromechanischer Drehratensensor nach einem der vorhergehenden Ansprüche, **dadurch gekennzeichnet, dass** die Ansatzstellen der Federelemente (10a,10b) vorzugsweise ellipsenförmig verrundet sind.

12. Mikromechanischer Drehratensensor nach einem der vorhergehenden Ansprüche, **dadurch gekennzeichnet, dass** die Detektionseinheit (2) zwei flügelartige Ausformungen (17a,17b) aufweist, wobei die flügelartigen Ausformungen (17a,17b) vorzugsweise Ausnehmungen (15a,15b) für die Federelemente (10a,10b) und deren Verformungen ausgleichenden Bereiche (20a,20b) aufweisen.

13. Mikromechanischer Drehratensensor nach einem der vorhergehenden Ansprüche, **dadurch gekennzeichnet, dass** die Detektionseinheit (2) an der zentralen Aufhängung (3,11a,11b), die einen zentralen Anker (3) aufweist, mittels wenigstens einer Biegefeder (11a,11b) mit dem Substrat (1) verbunden ist, die Drehungen der Detektionseinheit (2) relativ zum Substrat (1) um die Messachse (4) im wesentlichen verhindert, in die anderen Raumrichtungen jedoch zulässt.

14. Mikromechanischer Drehratensensor nach Anspruch 13, **dadurch gekennzeichnet, dass** die wenigstens eine Biegefeder (11a,11b) im Bereich ihrer Ansätze an der Detektionseinheit (2) und/oder an dem zentralen Anker (3) verzweigt ist.

15. Mikromechanischer Drehratensensor nach einem der Ansprüche 12 bis 14, **dadurch gekennzeichnet, dass** die Ansatzstellen der Biegefedern (11a,11b) vorzugsweise ellipsenförmig verrundet sind.

## Claims

1. Micromechanical rate-of-rotation sensor for detecting a rate-of-rotation around a measuring axis (4) (x-axis), comprising:
a substrate (1),
a detection unit (2) and
means for providing rotational vibration of said detection unit around an exitation axis (5) (Z-axis) orthogonal to said measuring axis (4),
wherein said detection unit (2) by a central suspension (3, 11a, 11b) rotatably is coupled to said substrate (1),
such that said detection unit (2) can perform a detection movement in form of a rotational vibration relative to said substrate around said central suspension (3, 11a, 11b) and around a sense axis (Y-axis) orthogonal to said measuring axis,
wherein said detection unit (2) and said substrate (1) are further coupled by at least two second suspensions (10a, 10b, 14a, 14b) for providing a responsivity specific to rotational axis,
wherein said second suspensions (14a, 14b, 10a, 10b) each comprise at least one spring element (10a, 10b),
**characterized in that**
said central suspension is located in the rotational point of said detection unit and said spring elements (10a, 10b) each comprising a partition (20a, 20b) for compensating deformation in their longitudinal direction.

2. Micromechanical rate-of-rotation sensor according to claim 1, wherein said two second suspensions are located on opposing sides of the point of rotation.

3. Micromechanical rate-of-rotation sensor according to claim 1 or 2, wherein the second outside suspensions (10a, 10b, 14a, 14b) are located on a straight line intercepting the central suspension (3, 11a, 11b) and opposing each other.

4. Micromechanical rate-of-rotation sensor according to one of the preceding claims, wherein at least one of said spring elements (10a, 10b) is provided as a cantilever beam.

5. Micromechanical rate-of-rotation sensor according to one of the preceding claims, wherein said partition (20a, 20b) for compensating deformation is provided in one of a meander-form, U-form, C-form or ring like form.

6. Micromechanical rate-of-rotation sensor according to one of the preceding claims, wherein at least one of the said spring elements (10a, 10b) in the direction of bending due to a rate-of-rotation to be detected comprises a spring stiffness which is higher than a spring stiffness in a direction orthogonal thereto.

7. Micromechanical rate-of-rotation sensor according to one of the preceding claims, wherein said spring elements (10a, 10b) each comprise an essential square cross section with a high aspect ratio.

8. Micromechanical rate-of-rotation sensor according to one of the preceding claims, wherein said spring elements (10a, 10b) on their ends (13a, 13b) distinct from the central suspension (3, 11a, 11b) in a radial direction are coupled with said detection unit (2).

9. Micromechanical rate-of-rotation sensor according to one of the preceding claims, wherein said spring elements (10a, 10b) with their end (12) opposite to their end (13) connected with said detection unit (2) are coupled to said substrate (1) preferably via an outside suspension (14a, 14b).

10. Micromechanical rate-of-rotation sensor according to one of the preceding claims, wherein said spring elements (10a, 10b) are branched in an area of their contact points to said detecting unit (2) and/or said substrate (1).

11. Micromechanical rate-of-rotation sensor according to one of the preceding claims, wherein said contact points of said spring elements (10a, 10b) are rounded preferably ellipsoidal.

12. Micromechanical rate-of-rotation sensor according to one of the preceding claims, wherein said detection unit (2) comprises two wing like protrusions (17a, 17b) which preferably comprise recesses (15a, 15b) for said spring elements (10a, 10b) and said deformation compensating partitions (20a, 20b).

13. Micromechanical rate-of-rotation sensor according to one of the preceding claims, wherein said detecting unit on said central suspension (3, 11a, 11b) comprising a central anchor (3) is coupled to said substrate (1) by at least one bending spring (11a, 11b), which at least one bending spring inhibits a rotation of said detection unit (2) relative to said substrate (1) around said measuring axis (4), but provides rotation of said detecting unit (2) relative to said substrate (1) in any other direction.

14. Micromechanical rate-of-rotation sensor according to claim 13, wherein said at least one bending spring (11 a, 11 b) in the area of its contact point with said detection unit (2) and/or with said central anchor (3) is branched.

15. Micromechanical rate-of-rotation sensor according to one of the claims 12 to 14, wherein said contact points of said bending springs (11a, 11b) are rounded, preferably ellipsoidal.

## Revendications

1. Capteur micromécanique de vitesse de rotation destiné à enregistrer une vitesse de rotation autour d'un axe de mesure (4) (axe des X), présentant:
- un substrat (1),
- une unité de détection (2) et
- des moyens pour produire une oscillation rotative de l'unité de détection autour d'un axe d'excitation (5) (axe des Z) orthogonal à l'axe de mesure (4),
- dans lequel l'unité de détection (2) est reliée au substrat (1) de manière rotative au moyen d'une suspension centrale (3, 11a, 11b), de telle manière que l'unité de détection (2) puisse effectuer un mouvement de détection autour d'un axe de détection (axe des Y) orthogonal à l'axe de mesure sous la forme d'une oscillation rotative autour de la suspension centrale (3, 11a, 11b) par rapport au substrat (1),
- dans lequel l'unité de détection (2) et le substrat (1) sont reliés l'un à l'autre au moyen d'au moins deux deuxièmes suspensions (10a, 1Ob; 14a, 14b) afin de former une caractéristique de réponse spécifique à l'axe de rotation,
- dans lequel les deuxièmes suspensions (14a, 14b, 10a, 10b) comprennent respectivement au moins un élément de ressort (10a, 10b),
**caractérisé en ce que** la suspension centrale est disposée au point de rotation de l'unité de détection et les éléments de ressort (10a, 10b) présentent respectivement une zone (20a, 20b) compensant des déformations dans leur direction longitudinale.

2. Capteur micromécanique de vitesse de rotation selon la revendication 1, **caractérisé en ce que** les deux deuxièmes suspensions sont disposées sur des côtés opposés l'un à l'autre du point de rotation.

3. Capteur micromécanique de vitesse de rotation selon la revendication 1 ou 2 précédentes, **caractérisé en ce que** les deuxièmes suspensions externes (10a, 10b; 14a, 14b) sont situées dans des positions diamétralement opposées l'une à l'autre sur une droite passant à travers la suspension centrale (3, 11a, 11b).

4. Capteur micromécanique de vitesse de rotation selon l'une quelconque des revendications précédentes, **caractérisé en ce qu'**au moins un des éléments de ressort (10a, 10b) est réalisé sous la forme d'une poutre de flexion.

5. Capteur micromécanique de vitesse de rotation selon l'une quelconque des revendications précédentes, **caractérisé en ce que** la zone (20a, 20b) compensant des déformations est réalisée sous forme sinueuse, en forme de U, en forme de C ou en forme d'anneau.

6. Capteur micromécanique de vitesse de rotation selon l'une quelconque des revendications précédentes, **caractérisé en ce qu'**au moins un des éléments de ressort (10a, 10b) présente une raideur de ressort plus élevée dans la direction de la déviation provoquée à cause de la vitesse de rotation à détecter que dans une direction orthogonale à celle-ci.

7. Capteur micromécanique de vitesse de rotation selon l'une quelconque des revendications précédentes, **caractérisé en ce que** les éléments de ressort (10a, 10b) présentent chacun une section transversale essentiellement rectangulaire avec un rapport d'élancement élevé.

8. Capteur micromécanique de vitesse de rotation selon l'une quelconque des revendications précédentes, **caractérisé en ce que** les éléments de ressort (10a, 10b) sont reliés à l'unité de détection (2) par leur extrémité (13a, 13b) radialement éloignée de la suspension centrale (3, 11a, 11b).

9. Capteur micromécanique de vitesse de rotation selon l'une quelconque des revendications précédentes, **caractérisé en ce que** les éléments de ressort (10a, 10b) sont reliés au substrat (1), de préférence au moyen d'ancrages externes (14a, 14b), par leur extrémité (12) opposée à l'extrémité (13) reliée à l'unité de détection (2).

10. Capteur micromécanique de vitesse de rotation selon l'une quelconque des revendications précédentes, **caractérisé en ce que** les éléments de ressort (10a, 10b) sont ramifiés dans la région de leurs attaches à l'unité de détection (2) et/ou au substrat (1).

11. Capteur micromécanique de vitesse de rotation selon l'une quelconque des revendications précédentes, **caractérisé en ce que** les points d'attache des éléments de ressort (10a, 10b) sont de préférence arrondis en forme d'ellipse.

12. Capteur micromécanique de vitesse de rotation selon l'une quelconque des revendications précédentes, **caractérisé en ce que** l'unité de détection (2) présente deux parties profilées (17a, 17b) en forme d'ailes, dans lequel les parties profilées en forme d'aile (17a, 17b) présentent de préférence des évidements (15a, 15b) pour les éléments de ressort (10a, 10b) et leurs zones (20a, 20b) compensant des déformations.

13. Capteur micromécanique de vitesse de rotation selon l'une quelconque des revendications précédentes, **caractérisé en ce que** l'unité de détection (2) est reliée au substrat (1), sur la suspension centrale (3, 11a, 11b), qui présente un ancrage central (3), au moyen d'au moins un ressort de flexion (11a, 11b), qui empêche essentiellement des rotations de l'unité de détection (2) par rapport au substrat (1) autour de l'axe de mesure (4) mais qui les permet dans d'autres directions spatiales.

14. Capteur micromécanique de vitesse de rotation selon la revendication 13, **caractérisé en ce que** ledit au moins un ressort de flexion (11a, 11b) est ramifié dans la région de ses attaches à l'unité de détection (2) et/ou à l'ancrage central (3).

15. Capteur micromécanique de vitesse de rotation selon l'une quelconque des revendications 12 à 14, **caractérisé en ce que** les points d'attache des ressorts de flexion (11a, 11b) sont de préférence arrondis en forme d'ellipse.
